# EUROPEAN PATENT APPLICATION

(11) **EP 3 574 965 A1**
(43) Date of publication of application: **04.12.2019**
(21) Application number: 18743984.9
(22) Date of filing: 17.01.2018
(51) Int. Cl.: A63F 13/795, A63F 13/352, A63F 13/57, A63F 13/48

(54) **METHOD FOR REALIZING USER MATCHING AND RELATED DEVICE**

(30) Priority: 24.01.2017 CN 201710060151
(71) Applicant: Tencent Technology (Shenzhen) Company Limited, Shenzhen, Guangdong 518057 (CN)
(72) Inventor: WANG, Lei, Shenzhen Guangdong 518057 (CN); HUANG, Tongtong, Shenzhen Guangdong 518057 (CN); HU, Wu, Shenzhen Guangdong 518057 (CN)
(74) Representative: AWA Sweden AB
(86) International application number: PCT/CN2018/072981
(87) International publication number: WO 2018/137525

(57) **Abstract**

The present disclosure discloses a method for implementing user matching and a related device, to provide a universal user matching method. The method includes: receiving a matching request from a client, the matching request carrying an application identifier and a user identifier; obtaining a matching queue identifier from the matching request and adding the user identifier in the matching request to a matching queue which corresponds to the matching queue identifier, when determining that a matching mode is asynchronous matching according to the application identifier; selecting a preset quantity of user identifiers from the matching queue to perform matching, and generating a matching result, the matching result including an identifier of a matching group and a user identifier in the matching group; and sending the matching result to a client corresponding to the user identifier in the matching group. The present disclosure further discloses an apparatus for implementing user matching and a server.

## Description

### RELATED APPLICATION

This application claims priority to Chinese Patent Application No. 201710060151.X, entitled "Method and Apparatus for Implementing User Matching" filed with the Chinese Patent Office on January 24, 2017, which is incorporated by reference in its entirety.

### FIELD OF THE TECHNOLOGY

The present disclosure relates to a field of Internet technologies, and in particular, to a method for implementing user matching and a related device.

### BACKGROUND OF THE DISCLOSURE

In some application programs, different users need to be matched into a same group. For example, in a multi-player battle game application program, first, different users need to be matched together according to a particular policy to battle against each other. In related technologies, each application that requires a matching procedure needs an independently developed matching procedure. However, for a platform with different types of application programs, developing an individual matching system for the different application programs in the related technologies is less universal and causes relatively high implementation costs. If an application program on the platform is changed, for example, when a new playing mode is added to a game application program on a game platform, the matching system of this application program needs to be modified adaptively, which limits expansibility.

### SUMMARY

In view of this, the present disclosure provides a method for implementing user matching and a related device, to resolve a technical problem in the related technologies that user matching has relatively poor universality, insufficient expansibility, and relatively high implementation costs.

To resolve the foregoing problem, the present disclosure provides the following technical solution.

According to a first aspect, an embodiment of the present disclosure provides a method for implementing user matching. The method includes:
receiving a matching request from a client, the matching request carrying an application identifier and a user identifier;
obtaining a matching queue identifier from the matching request and adding the user identifier to a matching queue which corresponds to the matching queue identifier, when determining that a matching mode is asynchronous matching according to the application identifier;
selecting a preset quantity of user identifiers from the matching queue to perform matching, and generating a matching result, the matching result including an identifier of a matching group and a user identifier in the matching group; and
sending the matching result to a client corresponding to the user identifier in the matching group.

According to a second aspect, an embodiment of the present disclosure provides an apparatus for implementing user matching. The apparatus includes:
a receiving unit, configured to receive a matching request from a client, the matching request carrying an application identifier and a user identifier;
a first adding unit, configured to: obtain a matching queue identifier from the matching request and add the user identifier to a matching queue which corresponds to the matching queue identifier, when determining that a matching mode is asynchronous matching according to the application identifier;
a selecting unit, configured to: select a preset quantity of user identifiers from the matching queue to perform matching, and generate a matching result, the matching result including an identifier of a matching group and a user identifier in the matching group; and
a sending unit, configured to send the matching result to a client corresponding to the user identifier in the matching group.

According to a third aspect, an embodiment of the present disclosure further provides a server, including:
a memory, configured to store computer executable program code;
a network interface; and
a processor, coupled with the memory and the network interface,
the program code including instructions, and when the processor executes the instructions, the instructions causing the server to perform the method according to the first aspect.

According to a fourth aspect, an embodiment of the present disclosure provides a computer storage medium, configured to store computer software instructions used by the server according to the foregoing aspect and including a program designed to perform the first aspect.

In conclusion, the embodiments of the present disclosure have the following beneficial effects.

In the embodiments of the present disclosure, at least one matching queue may be set for each application program according to an actual situation, a user may select a desired matching queue to join, after a matching request input by the user is received, a user identifier of the user may be added to the selected matching queue according to a matching queue identifier in the matching request, a preset quantity of users are selected from the matching queue to perform matching to generate a matching result, to provide a unified matching manner and procedure for different application programs, a new application program and a new usage mode in the application program may be expanded on an application program platform by adding a matching queue. For example, a new game application program is added to a game application program platform or a new playing mode is added to a game application program, so that user matching has relatively good universality and expansibility, and implementation costs are reduced.

### BRIEF DESCRIPTION OF THE DRAWINGS

FIG. 1 is a schematic diagram of an application scenario according to an embodiment of the present disclosure.
FIG. 2 is a flowchart of an embodiment of a method for implementing user matching according to embodiments of the present disclosure.
FIG. 3 is a schematic diagram of a matching queue according to an embodiment of the present disclosure.
FIG. 4 is a schematic diagram of asynchronous matching according to an embodiment of the present disclosure.
FIG. 5 is a schematic diagram of asynchronous matching according to an embodiment of the present disclosure.
FIG. 6 is a schematic diagram of asynchronous matching according to an embodiment of the present disclosure.
FIG. 7 is a schematic diagram of synchronous matching according to an embodiment of the present disclosure.
FIG. 8 is a schematic diagram of synchronous matching according to an embodiment of the present disclosure.
FIG. 9 is a schematic diagram of an embodiment of an apparatus for implementing user matching according to embodiments of the present disclosure.
FIG. 10 is a schematic diagram of a server according to an embodiment of the present disclosure.

### DESCRIPTION OF EMBODIMENTS

To make the objectives, features, and advantages of the present disclosure more obvious and comprehensible, embodiments of the present disclosure are further described in detail below with reference to the accompanying drawings and specific implementations.

In some application programs, different users need to be matched into a same group. For example, in a multi-player battle game application program, first, different users need to be matched together according to a particular policy to battle against each other. In related technologies, due to inconsistency of matching procedures and matching strategies of different games, different matching solutions need to be designed and implemented for different games, which is very changeling to develop a unified matching procedure on a plurality of different types of game platforms. Therefore, the embodiments of the present disclosure provide a method and an apparatus for implementing user matching and provide a universal and unified matching solution which is compatible with different types of game applications. This matching solution can support both a synchronous matching procedure and an asynchronous matching procedure, and provide a universal matching approach and procedure to application programs of chess games, casual games, and battle games. Therefore, the matching solution has relatively good universality and expansibility.

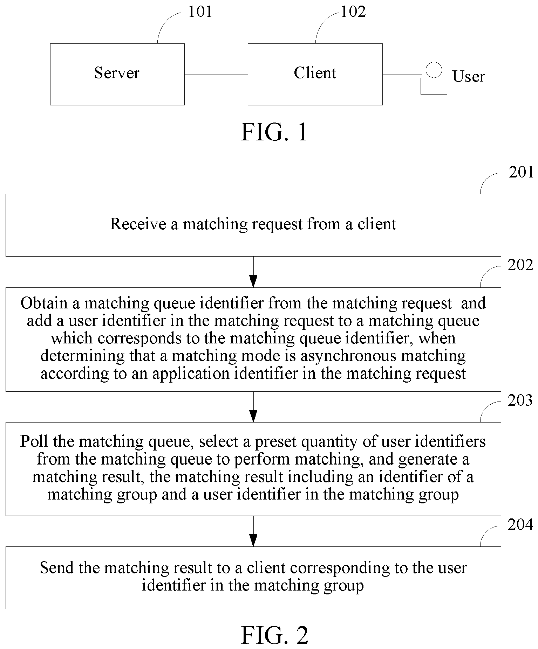

First, referring to FIG. 1, FIG. 1 is a schematic diagram of an exemplary application scenario according to an embodiment of the present disclosure.

A user interacts with a server 101 which provides a network application service through a client 102 installed on a user equipment.

A person skilled in the art can understand that, the schematic diagram in FIG. 1 is only an example in which the implementation of the present disclosure can be implemented. An application scope of the implementation of the present disclosure is not limited by any aspect of the frame. It should be noted that, the user equipment herein is any user equipment that is available at present, being researched and developed, or to be researched and developed in future, and that can realize interaction between the client 102 on the user equipment and the server 101 through a wired and/or wireless connection in any form (for example, Wi-Fi, a LAN, a cellular network, and a coaxial cable). The user equipment includes, but not limited to, a smartphone, a feature phone, a tablet computer, a laptop personal computer, a desktop personal computer, a small computer, a medium computer, and a large computer that are available at present, being researched and developed, or to be researched and developed in future. It should be further understood that, the server 101 herein is only an example of a device that is available at present, being researched and developed, or to be researched and developed in future, and that can provide an application service for a user. The implementation of the present disclosure is not limited thereto in terms of this aspect.

FIG. 2 is a flowchart of an embodiment of a method for implementing user matching according to embodiments of the present disclosure. This embodiment is described from an aspect of an apparatus for implementing user matching, and the apparatus for implementing user matching may be installed in a server. This embodiment includes the following steps.

Step 201: The server receives a matching request from a client.

When an application program starts, if a user needs to perform user matching, the user first sends the matching request to the server by using the client. According to different types of application programs, in this embodiment of the present disclosure, a matching procedure may be classified into synchronous matching and asynchronous matching. For the asynchronous matching, a matching waiting process may exist for a user. The user waits for a new user to join the application program, and enters the application program when a plurality of users is matched together. For example, a multi-player battle game application program is asynchronous matching and users need to be matched into one group according to a preset rule to join the game. In this embodiment, the asynchronous matching is first described. For the synchronous matching, no matching waiting process exists for a user. The user enters an application program immediately. For example, if the application program is a game application program in which the user and a banker (that is, a game system) battle against each other, the matching is synchronous matching. The user joins the game immediately after sending a matching request. The synchronous matching mode is described in subsequent embodiments.

Step 202: The server obtains a matching queue identifier from the matching request and adds a user identifier in the matching request to a matching queue which corresponds to the matching queue identifier, when determining that a matching mode is an asynchronous matching mode according to an application identifier in the matching request.

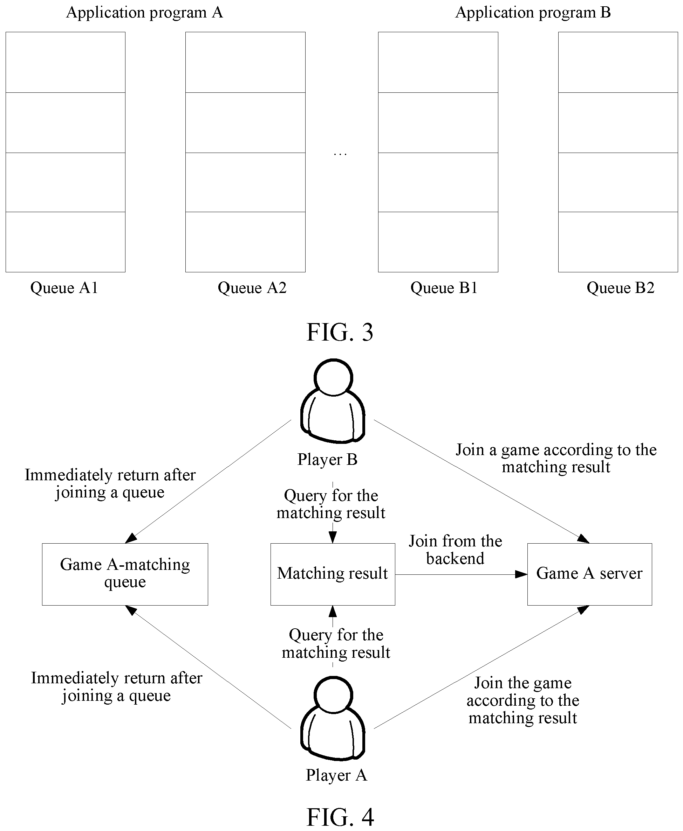

According to the foregoing description, the matching request may include the application identifier. The application identifier is used to identify the matching mode. The server may determine, according to the application identifier, whether the matching mode is asynchronous matching or synchronous matching. For example, "1" represents asynchronous matching, and "0" represents synchronous matching. In this embodiment, a matching queue is set for an application program in which the matching mode is asynchronous matching. At least one matching queue is set for each application program according to an actual matching requirement. Each of the at least one matching queue has a matching queue identifier. A quantity of the matching queues is not limited in a specific actual application. FIG. 3 is a schematic diagram of a matching queue. For example, for an application program A, a matching queue A1 (for example, a matching queue identifier is "A1") and a matching queue A2 (for example, a matching queue identifier is "A2") are set; for an application program B, a matching queue B1 (for example, a matching queue identifier is "B1") and a matching queue B2 (for example, a matching queue identifier is "B2") are set. In an actual application, the application program A and the application program B may be battle game application programs. The matching queue A1 and the matching queue B1 may be matching queues of a one-versus-one playing mode, and the matching queue A2 and the matching queue B2 may be matching queues of a two-versus-two playing mode. It can be understood that, for the one-versus-one playing mode, two users need to be selected from the corresponding matching queues to perform matching; and for the two-versus-two playing mode, four users need to be selected from the corresponding matching queues to perform matching. It should be noted that, the matching queue may be set according to an actual situation and a form of the matching queue is not limited in the present disclosure. It should be noted that, in this embodiment of the present disclosure, the matching queue identifier is only an example provided for ease of description and does not limit this application. For example, the matching queue identifier may alternatively be A 1V1, A 2V2, and the like, and is not specifically limited thereto.

When the matching mode is asynchronous matching, a user may select one particular playing mode in a game application program. The playing mode in the game application program has a matching queue correspondingly. The matching queue has a matching queue identifier, and the matching request may carry the matching queue identifier. After the matching queue identifier is obtained from the matching request, the user identifier in the matching request may be added to the matching queue which corresponds to the matching queue identifier, that is, the user identifier of the user that sends the matching request is added to the selected matching queue, to wait to be matched with other users.

Step 203: The server polls the matching queue, selects a preset quantity of user identifiers from the matching queue to perform matching, and generates a matching result, the matching result including an identifier of a matching group and a user identifier in the matching group.

After the user sends the matching request, the user identifier is added to a corresponding matching queue, and the user may alternatively cancel the matching before the matching is completed. The user may send a matching canceling request to the server, and the server may delete the user identifier in the matching canceling request from the matching queue, that is, user identifiers in the matching queue change in real time.

In this embodiment, the preset quantity of user identifiers may be selected from the matching queue by polling the matching queue to perform matching. In a possible implementation, only the preset quantity may be considered, and the preset quantity is associated with the matching queue. For example, a matching queue with a two-versus-two playing mode needs four users for matching. After it is obtained, through polling, that the matching queue has the preset quantity of user identifiers, the user identifiers are matched into the same matching group to generate the matching result, thereby the matching speed is increased.

In another possible implementation, a specific implementation of the selecting a preset quantity of user identifiers from the matching queue to perform matching, and generating a matching result may include: obtaining user information corresponding to the user identifiers in the matching queue, using the user identifiers corresponding to user information that satisfies a preset condition as a candidate user identifier group, selecting a preset quantity of user identifiers from the candidate user identifier group to perform matching, and generating the matching result. That is, when the preset quantity is considered, matching needs to be performed with reference to the user information. For example, in a two-versus-two playing mode, four users need to be selected from a corresponding matching queue to perform matching, and user identifiers of users whose user levels satisfy a preset condition are grouped into a same matching group, so that the preset quantity of user identifiers are selected according to the user information to perform matching, to generate a matching result. Therefore, similar users may be grouped into the same matching group, so that users can have better interaction with each other.

In some possible implementations of the present disclosure, the following content may be further included.

When no matching result is generated within a preset time period, it indicates that a current quantity of user identifiers does not match a quantity of user identifiers required by a current playing mode. For example, currently, in a matching queue, there are three user identifiers, and the matching queue is a matching queue of a two-versus-two playing mode. To reduce waiting time of users corresponding to the three user identifiers, a user identifier of a virtual user is added to the matching queue that corresponds to a matching queue identifier, the matching queue is polled, and a preset quantity of user identifiers are selected from the matching queue to perform matching, to generate a matching result.

For example, when no matching result is generated within the preset time period, that is, the waiting time of the user who spent the longest time waiting in a matching queue for the longest time exceeds the preset time period, an artificial intelligence (AI) user may be added to the matching queue, that is, a user identifier of a virtual user is added to the matching queue, then the matching queue is polled, a preset quantity of user identifiers are selected from the matching queue to perform matching, to generate a matching result. In this case, the user identifiers in the matching group may include the user identifier of the virtual user, so that the waiting time of the user is reduced.

Step 204: The server sends the matching result to a client that corresponds to the user identifier in the matching group.

In some possible implementations of the present disclosure, a specific implementation of the sending the matching result to a client that corresponds to the user identifier in the matching group may include:
actively sending, by the server after the matching result is generated, the matching result to the client corresponding to the user identifier in the matching group;
or
sending, by the server according to a result query request when receiving the result query request from the client corresponding to the user identifier in the matching group, the matching result to the client corresponding to the user identifier in the matching group.

In an actual application, the server may actively deliver the matching result, or the client may obtain the matching result through polling, and the client joins the matching group in an application program according to the matching result.

Therefore, in this embodiment of the present disclosure, at least one matching queue may be set for each application program according to an actual situation, a user may select a desired matching queue to join, after a matching request input by the user is received, a user identifier of the user may be added to the selected matching queue according to a matching queue identifier in the matching request, a preset quantity of users are selected from the matching queue by polling the matching queue, to perform matching to generate a matching result, to provide a unified matching manner and procedure for different application programs, a new application program and a new usage mode in the application program may be expanded on an application program platform by adding a matching queue. For example, a new game application program is added to a game application program platform or a new playing mode is added to the game application program, so that user matching has relatively good universality and expansibility, and implementation costs are reduced.

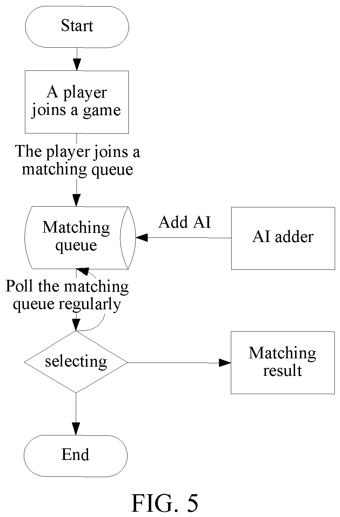

Referring to FIG. 4 to FIG. 6, the asynchronous matching mode in the method for implementing user matching provided in the embodiments of the present disclosure is described again by using an example in which an application program is a game application program.

A user, that is, a game player, may select a game playing mode when entering a game by using a client, that is, trigger to send a matching request to a server. The matching request carries an application identifier, a user identifier, and a matching queue identifier. The server adds the user identifier to a corresponding matching queue, and the client immediately return after sending the matching request. The server polls the matching queue regularly by using a matching thread and selects a preset quantity of user identifiers from the matching queue according to a particular rule (for example, a player waiting time and a player game level) to perform matching, to generate a matching result. For example, if a user joins a queue of a one-versus-one playing mode, every two user identifiers are grouped into a same matching group, and the matching groups have different matching group identifiers. The server triggers a game server to begin game initialization after completing the user matching, and sends the matching result to the game server, so that the game server establishes the matching group, and learns of the user identifier in the matching queue, so that the server joins the game from the backend. The client obtains the matching result through polling or obtains the matching result delivered by the server actively, establishes a connection to the game server according to the matching group identifier in the matching result, joins a corresponding matching group, and enters a game interface to begin a game. In addition, if a quantity of players is limited and the user matching cannot be completed within a preset time period, an AI user may further be added to the matching queue by using an AI adder, to complete matching between users as soon as possible and reduce waiting time of the users. Therefore, a new game application program and a new playing mode in a game application program may be expanded on a game platform by adding a matching queue, so that user matching has universality and may be expanded easily, thereby reducing implementation costs.

Meanwhile, the method for implementing user matching provided in the embodiments of the present disclosure further provides a user matching procedure in the synchronous matching mode. That is, when the matching mode is determined as the synchronous matching according to the application identifier in the matching request, a group identifier is obtained and sent to the client.

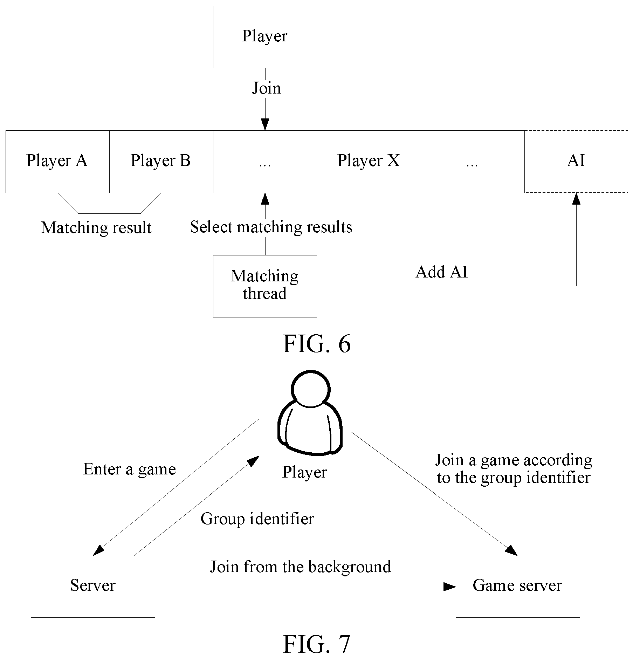

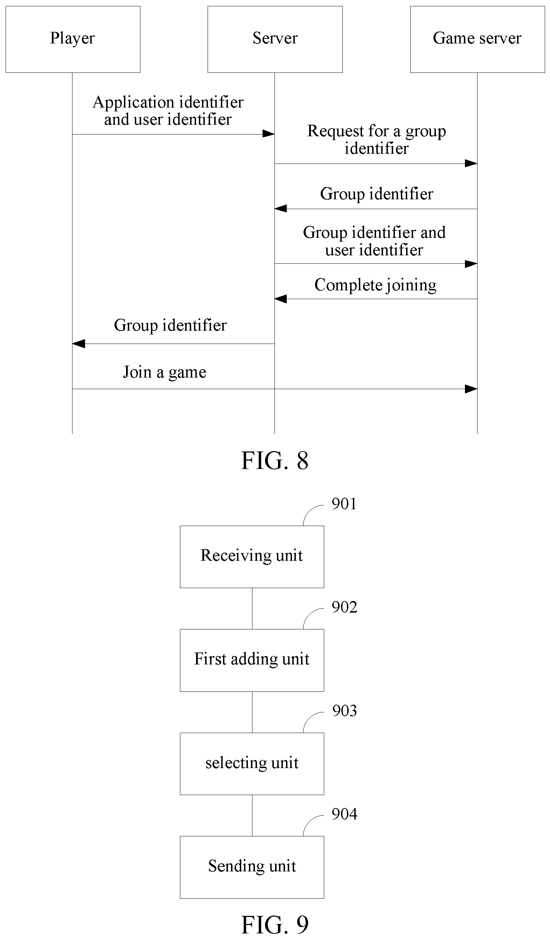

Referring to FIG. 7 and FIG. 8, the synchronous matching mode in the method for implementing user matching provided in the embodiments of the present disclosure is described by using an example in which an application program is a game application program.

When entering a game by using a client, a user, that is, a game player, may directly trigger to send a matching request to a server. The matching request carries an application identifier and a user identifier. The server determines, according to the application identifier, that a matching mode is synchronous matching. After determining that the matching mode is synchronous matching, the server obtains game table information from a game server, the table information may be regarded as a group identifier. That is, one or more users in a synchronous matching game may use the same table to play a game with a banker at the same time, and a plurality of tables may also play games in the game at the same time. After obtaining the table information (that is, the group identifier), the server triggers the game server to begin game initialization, and sends the user identifier and table information (that is, the group identifier) to the game server, so that the server joins the game from the backend. After joining the game, the server sends the group identifier to the client, so that the client joins a corresponding table, to enter a game interface to begin a game. In this way, the user may enter the game interface directly without waiting for a matching process to complete the synchronous matching procedure.

Referring to FIG. 9, the embodiments of the present disclosure further provide an embodiment of an apparatus for implementing user matching. The apparatus may include:
a receiving unit 901, configured to receive a matching request from a client, the matching request including an application identifier and a user identifier;
a first adding unit 902, configured to obtain a matching queue identifier from the matching request and add the user identifier in the matching request to a matching queue which corresponds to the matching queue identifier, when determining that a matching mode is asynchronous matching according to the application identifier in the matching request; and
a selecting unit 903, configured to select a preset quantity of user identifiers from the matching queue to perform matching, and generate a matching result, the matching result including an identifier of a matching group and a user identifier in the matching group.

In some possible implementations of the present disclosure, the selecting unit may include:
a polling sub-unit, configured to poll the matching queue;
an obtaining sub-unit, configured to obtain user information corresponding to user identifiers in the matching queue; and
a selection sub-unit, configured to: use user identifiers corresponding to user information that satisfies a preset condition as a candidate user identifier group, select a preset quantity of user identifiers from the candidate user identifier group to perform matching, and generate the matching result.

That is, the selecting unit may be specifically configured to: poll the matching queue, obtain the user information corresponding to the user identifiers in the matching queue, use the user identifiers corresponding to the user information that satisfies the preset condition as the candidate user identifier group, select the preset quantity of user identifiers from the candidate user identifier group to perform matching, and generate the matching result.

A sending unit 904 is configured to send the matching result to a client corresponding to the user identifier in the matching group.

In some possible implementations of the present disclosure, the sending unit may include:
a first sending sub-unit or a second sending sub-unit.

The first sending sub-unit may be configured to actively send, after the matching result is generated, the matching result to the client corresponding to the user identifier in the matching group.

The second sending sub-unit may be configured to send, when receiving a result query request from the client corresponding to the user identifier in the matching group, the matching result to the client corresponding to the user identifier in the matching group.

In some possible implementations of the present disclosure, the apparatus for implementing user matching provided in this embodiment of the present disclosure may further include:
a second adding unit, configured to add, when no matching result is generated within a preset time period, a user identifier of a virtual user to the matching queue corresponding to the matching queue identifier.

In some possible implementations of the present disclosure, the apparatus for implementing user matching provided in this embodiment of the present disclosure may further include:
an obtaining unit, configured to: obtain a group identifier when determining, according to the application identifier in the matching request, that the matching mode is synchronous matching, and send the group identifier to the client.

Therefore, in this embodiment of the present disclosure, one or more matching queues may be set for each application program according to an actual situation, a user may select a desired matching queue to join, after a matching request input by the user is received, a user identifier of the user may be added to the selected matching queue according to a matching queue identifier in the matching request, a preset quantity of users are selected from the matching queue by polling the matching queue, to perform matching to generate a matching result, to provide a unified matching manner and procedure for different application programs, a new application program and a new usage mode in the application program may be expanded on an application program platform by adding a matching queue. For example, a new game application program is added to a game application program platform or a new playing mode is added to a game application program, so that user matching has relatively good universality and expansibility, and implementation costs are reduced.

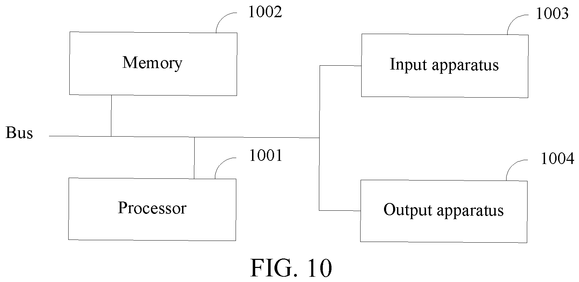

Correspondingly, an embodiment of the present disclosure further provides a server. As shown in FIG. 10, the server may include:

a processor 1001, a memory 1002, an input apparatus 1003, and an output apparatus 1004. There may be one or more processors 1001 in a user matching server. In FIG. 10, one processor is used as an example. In some embodiments of the present disclosure, the processor 1001, the memory 1002, the input apparatus 1003, and the output apparatus 1004 may be connected by using a bus or in another manner. In FIG. 10, an example in which a connection is implemented by using a bus is used.

The memory 1002 may be configured to store a software program and a module. The processor 1001 runs the software program and module stored in the memory 1002, to perform various functional applications and data processing of the user matching server. The memory 1002 may mainly include a program storage area and a data storage area. The program storage area may store an operating system, an application program required by at least one function, or the like. In addition, the memory 1002 may include a high-speed random access memory, and may further include a non-volatile memory such as at least one magnetic disk storage device or a flash memory device, or another volatile solid storage device. The input apparatus 1003 may be configured to: receive input digit or character information, and generate a key signal input related to a user setting and function control of the user matching server.

Specifically, in this embodiment, the processor 1001 loads, according to the following instructions, executable files corresponding to processes of one or more application programs into the memory 1002, and the processor 1001 runs the application programs stored in the memory 1002, thereby implementing the method steps performed by the server in the foregoing method embodiment. Specifically, the processor 1001 is further configured to perform the following functions:
receiving a matching request from a client, the matching request carrying an application identifier and a user identifier;
obtaining a matching queue identifier from the matching request and adding the user identifier in the matching request to a matching queue which corresponds to the matching queue identifier, when determining that a matching mode is asynchronous matching according to the application identifier in the matching request;
selecting a preset quantity of user identifiers from the matching queue to perform matching, and generating a matching result, the matching result including an identifier of a matching group and a user identifier in the matching group; and
sending the matching result to a client corresponding to the user identifier in the matching group.

Correspondingly, the selecting a preset quantity of user identifiers from the matching queue to perform matching, and generating a matching result includes:
obtaining user information corresponding to user identifiers in the matching queue; and
using user identifiers corresponding to user information that satisfies a preset condition as a candidate user identifier group and selecting a preset quantity of user identifiers from the candidate user identifier group to perform matching, and generating the matching result.

Correspondingly, the method further includes:
adding, when no matching result is generated within a preset time period, a user identifier of a virtual user to the matching queue corresponding to the matching queue identifier, polling the matching queue; selecting a preset quantity of user identifiers from the matching queue to perform matching, and generating the matching result.

Correspondingly, the sending the matching result to a client corresponding to the user identifier in the matching group includes:
actively sending, after the matching result is generated, the matching result to the client corresponding to the user identifier in the matching group;
or
sending, when receiving a result query request from the client corresponding to the user identifier in the matching group, the matching result to the client corresponding to the user identifier in the matching group.

Correspondingly, the method further includes:
obtaining a group identifier when determining, according to the application identifier in the matching request, that the matching mode is synchronous matching, and sending the group identifier to the client.

Therefore, in this embodiment of the present disclosure, one or more matching queues may be set for each application program according to an actual situation, a user may select a desired matching queue to join, after a matching request input by the user is received, a user identifier of the user may be added to the selected matching queue according to a matching queue identifier in the matching request, a preset quantity of users are selected from the matching queue by polling the matching queue, to perform matching to generate a matching result, to provide a unified matching manner and procedure for different application programs, a new application program and a new usage mode in the application program may be expanded on an application program platform by adding a matching queue. For example, a new game application program is added to a game application program platform or a new playing mode is added to a game application program, so that user matching has relatively good universality and expansibility, and implementation costs are reduced.

An embodiment of the present disclosure further provides a computer storage medium, configured to store computer software instructions used by the foregoing server and including a program designed to perform the method performed by the server in the foregoing method embodiment.

It should be noted that, the embodiments in this specification are all described in a progressive manner. Descriptions of each embodiment focus on differences from other embodiments, and same or similar parts among respective embodiments may be mutually referenced. For the system or apparatus disclosed in the embodiments, the system or apparatus corresponds to the method disclosed in the embodiments, and therefore is described briefly, and reference may be made to the description of the method for a related part.

It should be noted that the relational terms herein such as first and second are used only to differentiate an entity or operation from another entity or operation, and do not require or imply any actual relationship or sequence between these entities or operations. Moreover, the terms "include", "comprise", and any variants thereof are intended to cover a non-exclusive inclusion. Therefore, in the context of a process, a method, an object, or an apparatus that includes a series of elements, the process, method, object, or apparatus not only includes such elements, but also includes other elements not specified expressly, or may include inherent elements of the process, method, object, or apparatus. Unless otherwise specified, an element limited by "include a/an..." does not exclude other same elements existing in the process, the method, the article, or the device that includes the element.

The steps of the method or algorithm described with reference to the embodiments disclosed herein may be directly implemented by hardware, a software module performed by a process, or a combination thereof. The software module may be placed in a random access memory (RAM), a memory, a read-only memory (ROM), an electrically programmable ROM (EPROM), an electrically erasable programmable ROM (EEPROM), a register, a hard disk, a removable magnetic disk, a CD-ROM or a storage medium in any other form that is known in the technical field.

The above descriptions of the disclosed embodiments make a person skilled in the art implement or use the present disclosure. Various modifications to these embodiments are obvious to a person skilled in the art, and the general principles defined in this specification may be implemented in other embodiments without departing from the spirit and scope of the present disclosure. Therefore, the present disclosure is not limited to these embodiments illustrated in the present disclosure, but needs to conform to the broadest scope consistent with the principles and novel features disclosed in the present disclosure.

## Claims

1. A method for implementing user matching, comprising:
receiving a matching request from a client, the matching request carrying an application identifier and a user identifier;
obtaining a matching queue identifier from the matching request and adding the user identifier to a matching queue which corresponds to the matching queue identifier, when determining that a matching mode is asynchronous matching according to the application identifier;
selecting a preset quantity of user identifiers from the matching queue to perform matching, and generating a matching result, the matching result comprising an identifier of a matching group and a user identifier in the matching group; and
sending the matching result to a client corresponding to the user identifier in the matching group.

2. The method according to claim 1, wherein the selecting a preset quantity of user identifiers from the matching queue to perform matching, and generating a matching result comprises:
polling the matching queue;
obtaining user information corresponding to user identifiers in the matching queue; and
using user identifiers corresponding to user information that satisfies a preset condition as a candidate user identifier group, selecting the preset quantity of user identifiers from the candidate user identifier group to perform matching, and generating the matching result.

3. The method according to claim 1 or 2, further comprising:
adding, when no matching result is generated within a preset time period, a user identifier of a virtual user to the matching queue corresponding to the matching queue identifier; and
selecting the preset quantity of user identifiers from the matching queue having the user identifier of the virtual user added to perform matching and generating the matching result.

4. The method according to claim 1, wherein the sending the matching result to a client corresponding to the user identifier in the matching group comprises:
actively sending, after the matching result is generated, the matching result to the client corresponding to the user identifier in the matching group;
or
receiving a result query request from the client corresponding to the user identifier in the matching group; and
sending, according to the result query request, the matching result to the client corresponding to the user identifier in the matching group.

5. The method according to claim 1, further comprising:
obtaining a group identifier when determining, according to the application identifier, that the matching mode is synchronous matching, and sending the group identifier to the client.

6. An apparatus for implementing user matching, comprising:
a receiving unit, configured to receive a matching request from a client, the matching request carrying an application identifier and a user identifier;
a first adding unit, configured to obtain a matching queue identifier from the matching request and add the user identifier to a matching queue which corresponds to the matching queue identifier, when determining that a matching mode is asynchronous matching according to the application identifier;
a selecting unit, configured to select a preset quantity of user identifiers from the matching queue to perform matching, and generate a matching result, the matching result comprising an identifier of a matching group and a user identifier in the matching group; and
a sending unit, configured to send the matching result to a client corresponding to the user identifier in the matching group.

7. The apparatus according to claim 6, wherein the selection unit comprises:
a polling sub-unit, configured to poll the matching queue;
an obtaining sub-unit, configured to obtain user information corresponding to user identifiers in the matching queue; and
a selection sub-unit, configured to: use user identifiers corresponding to user information that satisfies a preset condition as a candidate user identifier group, select the preset quantity of user identifiers from the candidate user identifier group to perform matching, and generate the matching result.

8. The apparatus according to claim 6 or 7, further comprising:
a second adding unit, configured to add, when no matching result is generated within a preset time period, a user identifier of a virtual user to the matching queue corresponding to the matching queue identifier, wherein
the selecting unit is further configured to: select the preset quantity of user identifiers from the matching queue having the user identifier of the virtual user added to perform matching, and generate the matching result.

9. The apparatus according to claim 6, wherein the sending unit comprises:
a first sending sub-unit or a second sending sub-unit;
the first sending sub-unit is configured to actively send, after the matching result is generated, the matching result to the client corresponding to the user identifier in the matching group; and
the second sending sub-unit is configured to send, when receiving a result query request from the client corresponding to the user identifier in the matching group, the matching result to the client corresponding to the user identifier in the matching group.

10. The apparatus according to claim 6, further comprising:
an obtaining unit, configured to: obtain a group identifier when determining, according to the application identifier, that the matching mode is synchronous matching, and send the group identifier to the client.

11. A server, comprising:
a memory, configured to store computer executable program code;
a network interface; and
a processor, coupled with the memory and the network interface,
the program code comprising instructions, and when the processor executes the instructions, the instructions causing the server to perform the method according to any one of claims 1 to 5.

12. A computer storage medium, configured to store computer software instructions used by a server and comprising a program designed to perform the method according to any one of claims 1 to 5.
